# EUROPEAN PATENT SPECIFICATION

(11) **EP 3 075 513 B1**
(45) Date of publication and mention of the grant of the patent: **07.03.2018**
(21) Application number: 16161128.0
(22) Date of filing: 18.03.2016
(51) Int. Cl.: B29C 45/17

(54) **INJECTION MOLDING MACHINE**
SPRITZGIESSMASCHINE
MACHINE DE MOULAGE À INJECTION

(30) Priority: 31.03.2015 JP 2015073972
(43) Date of publication of application: 05.10.2016
(73) Proprietor: SUMITOMO HEAVY INDUSTRIES, LTD., Tokyo 141-6025 (JP)
(72) Inventor: SAKAI, Kiminori, Kanagawa 237-8555 (JP)
(74) Representative: Louis Pöhlau Lohrentz

(56) References cited:
- EP-A1- 1 837 153
- DE-U1- 8 401 999
- JP-A- 2003 025 378
- US-A1- 2008 175 944

## Description

### BACKGROUND OF THE INVENTION

### Field of the Invention

The present invention relates to an injection molding machine.

### Description of Related Art

Injection molding machines have a mold clamping unit that performs mold opening, mold clamping, and mold closing of a mold unit, and a frame that supports the mold clamping unit (for example, refer to Japanese Unexamined Patent Application Publication No. 2002-337184). The mold unit is configured to include a stationary mold and a movable mold. The mold clamping unit has a stationary platen to which the stationary mold is attached, a movable platen to which the movable mold is attached, and a rear platen coupled to the stationary platen at a distance therefrom via tie-bars. The movable platen is disposed between the stationary platen and the rear platen. One of the stationary platen and the rear platen is fixed to the frame. The mold clamping unit moves the movable platen to the stationary platen, thereby performing mold closing, mold clamping, and mold opening of the mold unit.

The platen fixed to the frame may be tilted due to the operation of the mold clamping unit, and a technique of suppressing the tilting has been desired.

US 2008/0175944 A1 discloses a molding-system platen having anti-tilt structure. EP 1 837 153 A1 discloses a mold clamping mechanism of injection molding machine. JP2003-25378 A discloses a fixed mold support device for injection molding machine. DE 84 01 999 U1 discloses an injection molding machine and a mold clamping unit supported by a stationary mold closing unit and an abutment plate.

### SUMMARY OF THE INVENTION

The invention has been made in view of the above problems, and a main object thereof is to provide an injection molding machine that suppresses the tilting of a platen fixed to a frame.

In order to solve the above problems, according to an aspect of the invention, there is provided an injection molding machine including a platen fixed to a frame. The platen includes a platen body part wherein the connecting part includes a plate part that is placed on the frame, a connecting part that connects the platen body part and the frame, and a reinforcing part that protrudes at least to one side in a mold opening/closing direction from at least one of the platen body part or the connecting part, and limits the tilting of the platen body part. The reinforcing part is a plate-like rib perpendicular to a front surface of the stationary platen body part and to an upper surface of the plate part. At least one of the fixed positions of the platen fixed to the frame is disposed on the same side as the reinforcing part, using a member from which the reinforcing part protrudes out of the platen body part and the connecting part as a reference, and overlaps a zone parallel to the mold opening/closing direction passing through the reinforcing part and equal to the width of the reinforcing part in a top view.

According to the aspect of the invention, provided is the injection molding machine that suppresses the tilting of the platen fixed to the frame.

### BRIEF DESCRIPTION OF THE DRAWINGS

Fig. 1 is a view illustrating a state at the time of the completion of mold opening of an injection molding machine according to an embodiment.
Fig. 2 is a view illustrating a state at the time of the mold clamping of the injection molding machine according to the embodiment.
Fig. 3 is a top view illustrating a stationary platen, a stationary mold, and a frame according to the embodiment.

### DETAILED DESCRIPTION OF THE INVENTION

Although an embodiment for carrying out the invention will be described below with reference to the drawings, the same or corresponding components will be designated by the same or corresponding reference signs, and the description thereof will be omitted.

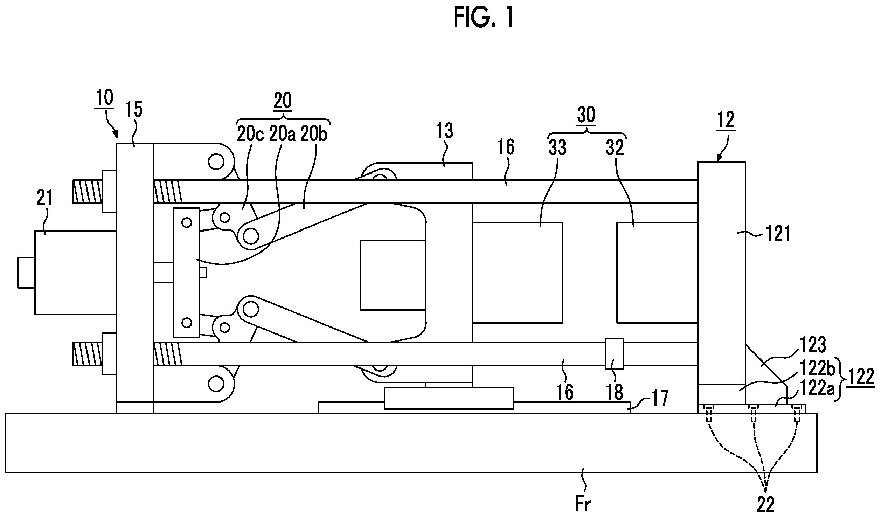

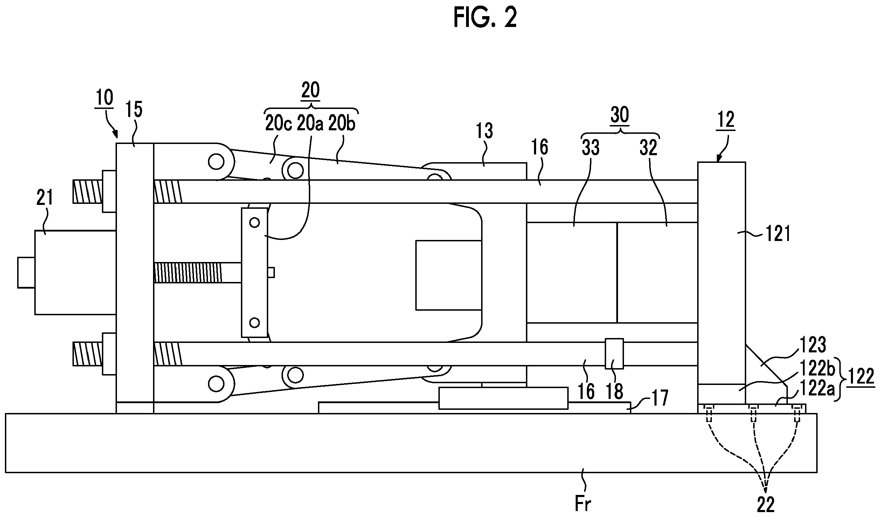

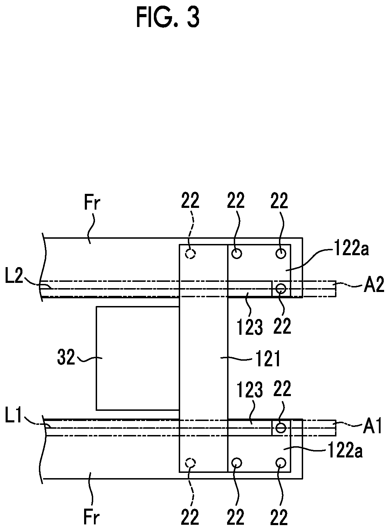

Fig. 1 is a view illustrating a state at the time of the completion of mold opening of an injection molding machine according to an embodiment. Fig. 2 is a view illustrating a state at the time of the mold clamping of the injection molding machine according to the embodiment. Fig. 3 is a top view illustrating a stationary platen, a stationary mold, and a frame according to the embodiment. The injection molding machine has a frame Fr, a mold clamping unit 10, and the like.

The mold clamping unit 10 performs mold closing, mold clamping, and mold opening of a mold unit 30. The mold clamping unit 10 has a stationary platen 12, a movable platen 13, a rear platen 15, a tie-bar 16, a toggle mechanism 20, and a mold clamping motor 21.

Hereinafter, a description will be made with a movement direction (rightward direction in Figs. 1 to 3) of the movable platen 13 at the time of mold closing as the front and a movement direction (leftward direction in Figs. 1 to 3) of the movable platen 13 at the time of mold opening as the rear. Additionally, a description will be made with a direction (a paper surface vertical direction in Figs. 1 and 2 and a paper surface upward-downward direction in Fig. 3) perpendicular to a forward-rearward direction and an upward-downward direction as a leftward-rightward direction.

The stationary platen 12 is fixed to the frame Fr. A stationary mold 32 is attached to the surface of the stationary platen 12 that faces the movable platen 13.

The movable platen 13 is made movable along a guide (for example, a guide rail) 17 laid on the frame Fr, and is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The stationary mold 32 and the movable mold 33 constitute the mold unit 30.

The rear platen 15 is coupled to the stationary platen 12 at a distance therefrom, and is placed on the frame Fr so as to be movable in a mold opening/closing direction. In addition, the rear platen 15 may be made movable along a guide laid on the frame Fr. The guide of the rear platen 15 may be shared by a guide 17 of the movable platen 13.

In addition, in the present embodiment, the stationary platen 12 is fixed to the frame Fr and the rear platen 15 is made movable in the mold opening/closing direction with respect to the frame Fr. However, the rear platen 15 may be fixed to the frame Fr and the stationary platen 12 may be made movable in the mold opening/closing direction with respect to the frame Fr.

The tie-bar 16 couples the stationary platen 12 and the rear platen 15 with a space therebetween. A plurality of the tie-bars 16 may be used. Each tie-bar 16 is made parallel to the mold opening/closing direction, and is extended in response to a clamping force. At least one tie-bar 16 may be provided with a clamping force detector 18. The clamping force detector 18 may be of a strain gauge type, and may detect the strain of the tie-bar 16, thereby detecting a clamping force.

In addition, the clamping force detector 18 is not limited to the strain gauge type, and may be of a piezoelectric type, a capacitance type, a hydraulic type, an electromagnetic type, or the like, and the attachment position thereof is also not limited to the tie-bars 16.

The toggle mechanism 20 is disposed between the movable platen 13 and the rear platen 15. The toggle mechanism 20 is configured to include a cross-head 20a, a plurality of links 20b and 20c, and the like. One link 20b is rockably attached to the movable platen 13, and the other link 20c is rockably attached to the rear platen 15. The links 20b and 20c are bendably and stretchably coupled together by a pin or the like. By moving the cross-head 20a forward and backward, the plurality of links 20b and 20c are bent and stretched, and the movable platen 13 is moved forward and backward with respect to the rear platen 15.

The mold clamping motor 21 is attached to the rear platen 15, and the movable platen 13 is moved forward and backward by moving the cross-head 20a forward and backward. A motion conversion mechanism, which converts the rotational motion of the mold clamping motor 21 into a linear motion to transmit the converted linear motion to the cross-he ad 20a, is provided between the mold clamping motor 21 and the cross-head 20a. The motion conversion mechanism is configured to include, for example, a ball screw mechanism.

The operation of the mold clamping unit 10 is controlled by a controller. The controller is configured to include a microcomputer or the like, and controls a mold closing step, a mold clamping step, a mold opening step, and the like.

In the mold closing step, the movable mold 33 is brought into contact with the stationary mold 32 by driving the mold clamping motor 21 to move the movable platen 13 forward.

In the mold clamping step, a clamping force is generating by further driving the mold clamping motor 21. A cavity space is formed between the movable mold 33 and the stationary mold 32 at the time of mold clamping, and the cavity space is filled with a liquid molding material. The molding material within the cavity space is hardened and becomes a molding product.

In the mold opening step, the movable mold 33 is separated from the stationary mold 32 by driving the mold clamping motor 21 to move the movable platen 13 backward.

Although the mold clamping unit 10 of the present embodiment has the mold clamping motor 21 as a driving source, the mold clamping unit may have a hydraulic cylinder instead of the mold clamping motor 21. Additionally, the mold clamping unit 10 may have a linear motor for mold opening and closing, and may have an electromagnet for mold clamping.

Next, the stationary platen 12 will be described again with reference to Figs. 1 to 3. The stationary platen 12 is fixed to the frame Fr with a bolt 22. A bolt hole corresponding to the bolt 22 is formed in the frame Fr. A plurality of the bolts 22 and a plurality of the bolt holes may be provided.

In addition, although a method of fixing the stationary platen 12 to the frame Fr is bolting in the present embodiment, pinning, welding, or the like may be used.

The stationary platen 12 has a stationary platen body part 121, a connecting part 122, and a reinforcing part 123.

The stationary mold 32 is attached to the stationary platen body part 121. The stationary mold 32 is attached to a rear surface of the stationary platen body part 121. The tie-bars 16 other than the stationary mold 32 are attached to the stationary platen body part 121.

The connecting part 122 connects the stationary platen body part 121 and the frame Fr. A plurality of (for example, two) the connecting parts 122 may be provided with a space therebetween in the leftward-rightward direction. Each connecting part 122 supports the stationary platen body part 121 from below.

The connecting part 122 includes a plate part 122a and a pillar part 122b. The plate part 122a is placed on the frame Fr. The pillar part 122b connects the plate part 122a and the stationary platen body part 121.

Insertion holes through which the bolts 22 are inserted are formed in the plate part 122a. A plurality of the insertion holes may be formed corresponding to the plurality of bolts 22. The bolts 22 are threadedly engaged with the bolt holes of the frame Fr, and fixation of the stationary platen 12 to the frame Fr is performed by clamping the plate part 122a to the frame Fr with the bolts 22. The positions of the bolts 22 represent the positions of the stationary platen 12 fixed to the frame Fr.

The reinforcing part 123 protrudes at least to one side (the front in Figs. 1 to 3) in the mold opening/closing direction from at least one (both in Figs. 1 and 2) of the stationary platen body part 121 and the connecting part 122, and the tilting of the stationary platen body part 121 is limited. The reinforcing part 123 may protrude to the front from both of a front surface (a surface opposite to the stationary mold 32) of the stationary platen body part 121 and a front surface of the pillar part 122b. A plurality of (for example, two) the reinforcing parts 123 may be provided at intervals in the leftward-rightward direction. Each reinforcing part 123 is a plate-like rib perpendicular to a front surface of the stationary platen body part 121, the front surface of the pillar part 122b, and an upper surface of the plate part 122a.

Meanwhile, the reinforcing part 123, as described above, protrudes to the front, using as a reference a member (hereinafter referred to as a reference member) from which the reinforcing part 123 protrudes out of the stationary platen body part 121 and the connecting part 122, and limits forward tilting of the stationary platen body part 121. The resistance force of the reinforcing part 123 against compression can limit the forward tilting of the stationary platen body part 121.

Meanwhile, the bolts 22 can limit backward tilting of the stationary platen body part 121. The positional relationship between the reinforcing part 123 and the bolts 22 is set so that the bolts 22 can sufficiently limit the backward tilting of the stationary platen body part 121, sufficiently using the resistance force of the reinforcing part 123 against pulling.

In the present embodiment, at least one (two in Fig. 3) of the positions of the bolts 22 is disposed on the same side as the reinforcing part 123 with the reference member as a reference, and overlap a zone A1 or A2 parallel to the mold opening/closing direction passing through the reinforcing part 123 and equal to the width of the zone A1 or A2 of the reinforcing part 123 in a top view. The zone A1 or A2 includes a region obtained by extending the reinforcing part 123 in the mold opening/closing direction. At least some of the bolts 22 may overlap the zone A1 or A2 in the top view.

Since the position of at least one bolt 22 overlaps the zone A1 or A2 in the top view, compared to a case where the positions of all the bolts 22 are outside of the zone A1 or A2, the resistance force of the reinforcing part 123 against pulling can be sufficiently used when a reaction force caused by the action of the mold clamping unit 10 acts on the stationary platen body part 121. Hence, the lifting of the plate part 122a can be suppressed, and the backward tilting of the stationary platen body part 121 can be sufficiently limited.

The center of at least one of the positions of the bolts 22 may be disposed on the same side as the reinforcing part 123 with the reference member as a reference, and may overlap a straight line L1 or L2 parallel to the mold opening/closing direction passing through the center of the reinforcing part 123 in the top view. This arrangement can further suppress the lifting of the plate part 122a.

At least one of the positions of the bolts 22 may be disposed on the same side as the reinforcing part 123 with the reference member as a reference, and may overlap a region obtained by extending the reinforcing part 123 in the mold opening/closing direction in the top view. A bolt that overlaps this region in the top view fastens the plate part 122a to the frame Fr.

In addition, at least one of the positions of the bolts 22 may be disposed on the same side as the reinforcing part 123 with the reference member as a reference, and may overlap the reinforcing part 123 in the top view. The bolts 22 that overlap the reinforcing part 123 in the top view fasten the reinforcing part 123 to the frame Fr.

Although the embodiment of the injection molding machine has been described above, the invention is not limited to the above-described embodiment, and various alterations and improvements can be made within the scope of the invention described in the claims.

For example, although the reinforcing part 123 of the above embodiment protrudes to the front from both of the stationary platen body part 121 and the connecting part 122, the reinforcing part may protrude to the front from any one of the stationary platen body part and the connecting part. That is, the reinforcing part 123 may protrude to the front only from the stationary platen body part 121, or may protrude to the front only from the connecting part 122.

Additionally, although the reinforcing part 123 of the above embodiment protrudes to the front from the reference member, the reinforcing part may protrude to the rear. Even in this case, as long as at least one of the positions of the bolts 22 is disposed on the same side as the reinforcing part 123 with the reference member as a reference, and is disposed on the same straight line parallel to the reinforcing part 123 in the mold opening/closing direction, the tilting of the stationary platen body part 121 can be suppressed. The reinforcing part 123 may protrude to both the front and the rear from the reference member.

Additionally, although the reinforcing part 123 of the above embodiment is connected to the plate part 122a, the reinforcing part may be installed in the frame Fr without being connected to the plate part 122a. For example, the reinforcing part 123 may be a rod-shaped member that is obliquely installed on the upper surface of the frame Fr. A plate separate from the plate part 122a may be provided under the rod-shaped member. This plate may be fastened to the frame Fr with the bolts 22.

Although the connecting part 122 of the above embodiment supports the stationary platen body part 121 from below, the connecting part may support the stationary platen body part 121 from the side (the left or the right) . In this case, the connecting part may further have a horizontal part that horizontally extends from an upper end of the pillar part 122b. A front end of a horizontal part is connected to a central part of the stationary platen body part 121 in the upward-downward direction. Even in this case, the reinforcing part just has to protrude to the front, the rear, or both of the front and the rear from at least one of the stationary platen body part 121 and the connecting part 122.

In the above embodiment, the stationary platen 12 is fixed to the frame Fr. However, the rear platen 15 may be fixed to the frame Fr. In this case, the rear platen 15 has a rear platen body part corresponding to the stationary platen body part 121, a connecting part corresponding to the connecting part 122, and a reinforcing part corresponding to the reinforcing part 123. The tie-bars 16 are attached to the rear platen body part. By suppressing the tilting of the rear platen 15, the tilting of the stationary platen 12 coupled to the rear platen 15 via the tie-bars 16 can be suppressed.

## Claims

1. An injection molding machine comprising:
a platen (12) fixed to a frame (Fr),
wherein the platen (12) includes
a platen body part (121),
a connecting part (122) that connects the platen body part (121) and the frame (Fr), wherein the connecting part (122) includes a plate part (122a) that is placed on the frame (Fr), and
a reinforcing part (123) that protrudes at least to one side in a mold opening/closing direction from at least one of the platen body part (121) or the connecting part (122), and limits the tilting of the platen body part (121), wherein the reinforcing part (123) is a plate-like rib perpendicular to a front surface of the platen body part (121) and to an upper surface of the plate part (122a), and
**characterized in that at least one of the fixed positions of the platen (12)** fixed to the frame (Fr) is disposed on the same side as the reinforcing part (123), using a member from which the reinforcing part (123) protrudes out of the platen body part (121) and the connecting part (122) as a reference, and overlaps a zone (A1, A2) parallel to the mold opening/closing direction passing through the reinforcing part (123) and equal to the width of the reinforcing part (123) in a top view.

2. The injection molding machine according to Claim 1,
wherein the center of at least one of the fixed positions is disposed on the same side as the reinforcing part (123) with the reference member as a reference, and overlaps a straight line parallel (L1, L2) to the mold opening/closing direction passing through the center of the reinforcing part (123) in a top view.

3. The injection molding machine according to Claim 1 or 2,
wherein at least one of the fixed positions is disposed on the same side as the reinforcing part (123) with the reference member as a reference, and overlaps the reinforcing part (123) in a top view.

4. The injection molding machine according to any one of Claims 1 to 3,
wherein the platen (12) is a stationary platen (12) to which a stationary mold (32) is attached, and
wherein the platen body part (121) has the stationary mold (32) attached thereto.

5. The injection molding machine according to any one of Claims 1 to 4,
wherein the platen is a rear platen (15) coupled to a stationary platen (12), to which a stationary mold (32) is attached, at a distance therefrom via a tie-bar (16), and
wherein the platen body part (121) has the tie-bar (16) attached thereto.

## Patentansprüche

1. Spritzgießmaschine, umfassend:
eine an einem Rahmen (Fr) befestigte Platte (12),
wobei die Platte (12) ein Plattenkörperteil (121),
sowie ein Verbindungsteil (122), welches das Plattenkörperteil (121) und den Rahmen (Fr) verbindet, umfasst, wobei das Verbindungsteil (122) ein Plattenteil (122a), das auf dem Rahmen (Fr) platziert wird, und ein Verstärkungsteil (123) umfasst, das wenigstens auf einer Seite in Formöffnungs-/ Schließrichtung von dem Plattenkörperteil (121) oder dem Verbindungsteil (122) vorsteht und das Kippen des Plattenkörperteils (121) begrenzt,
wobei das Verstärkungsteil (123) eine plattenartige Rippe ist, die senkrecht zu einer vorderen Oberfläche des Plattenkörperteils (121) und zu einer oberen Oberfläche des Plattenteils (122a) vorspringt, und
**dadurch gekennzeichnet ist, dass**
wenigstens eine der festgelegten Positionen der an dem Rahmen (Fr) befestigten Platte (12) auf derselben Seite wie das Verstärkungsteil (123) angeordnet ist, wobei ein Bauteil verwendet wird, von dem aus das Verstärkungsteil (123) aus dem Plattenkörperteil (121) und dem Verbindungsteil (122) als Referenz vorspringt und mit einer zur Formöffnungs-/ Schließrichtung parallelen Zone (A1, A2) überlappt, die durch das Verstärkungsteil (123) reicht und in einer Draufsicht genau so breit ist wie das Verstärkungsteil (123).

2. Spritzgießmaschine nach Anspruch 1,
wobei die Mitte wenigstens einer der festgelegten Positionen auf derselben Seite angeordnet ist wie das Verstärkungsteil (123), mit dem Referenzteil als Referenz, und mit einer geraden Linie (L1, L2) überlappt, die zur Formöffnungs-/ Schließrichtung parallel ist und in einer Draufsicht durch die Mitte des Verstärkungsteils (123) geht.

3. Spritzgießmaschine nach Anspruch 1 oder 2,
wobei wenigstens eine der festgelegten Positionen auf derselben Seite angeordnet ist wie das Verstärkungsteil (123), mit dem Referenzteil als Referenz, und in einer Draufsicht mit dem Verstärkungsteil (123) überlappt.

4. Spritzgießmaschine nach einem der Ansprüche 1 bis 3,
wobei die Platte (12) eine feststehende Platte (12) ist, an der eine feststehende Form (32) befestigt ist, und
wobei an dem Plattenkörperteil (121) die feststehende Form (32) befestigt ist.

5. Spritzgießmaschine nach einem der Ansprüche 1 bis 4,
wobei die Platte eine hintere Platte (15) ist, die über eine Verbindungsstange (16) in einem Abstand von dieser mit einer feststehenden Platte (12) gekoppelt ist, an der eine feststehende Form (32) befestigt ist, und
wobei an dem Plattenkörperteil (121) die Verbindungsstange (16) befestigt ist.

## Revendications

1. Machine de moulage par injection comprenant :
un plateau (12) fixé à un bâti (Fr),
dans laquelle le plateau (12) comprend :
une partie de corps de plateau (121),
une partie de raccordement (122) qui raccorde la partie de corps de plateau (121) et le bâti (Fr), dans laquelle la partie de raccordement (122) comprend une partie de plaque (122a) qui est placée sur le bâti (Fr), et une partie de renforcement (123) qui fait saillie au moins sur un côté dans une direction d'ouverture / fermeture du moule à partir d'au moins l'une parmi la partie de corps de plateau (121) ou la partie de raccordement (122), et limite l'inclinaison de la partie de corps de plateau (121), dans laquelle la partie de renforcement (123) est une nervure en forme de plaque perpendiculaire à une surface avant de la partie de corps de plateau (121) et à une surface supérieure de la partie de plaque (122a), et
**caractérisée en ce qu'**au moins l'une des positions fixes du plateau (12) fixé sur le bâti (Fr) est disposée sur le même côté que la partie de renforcement (123), à l'aide d'un élément à partir duquel la partie de renforcement (123) fait saillie hors de la partie de corps de plateau (121) et de la partie de raccordement (122) en tant que référence, et recouvre une zone (A1, A2) parallèle à la direction d'ouverture / fermeture de moule passant par la partie de renforcement (123) et égale à la largeur de la partie de renforcement (123), sur une vue de dessus.

2. Machine de moulage par injection selon la revendication 1,
dans laquelle le centre d'au moins l'une des positions fixes est disposé sur le même côté que la partie de renforcement (123) avec l'élément de référence en tant que référence, et recouvre une ligne droite parallèle (L1, L2) à la direction d'ouverture / fermeture de moule passant par le centre de la partie de renforcement (123), sur une vue de dessus.

3. Machine de moulage par injection selon la revendication 1 ou 2,
dans laquelle au moins l'une des positions fixes est disposée sur le même côté que la partie de renforcement (123) avec l'élément de référence en tant que référence, et recouvre la partie de renforcement (123), sur une vue de dessus.

4. Machine de moulage par injection selon l'une quelconque des revendications 1 à 3,
dans laquelle le plateau (12) est un plateau fixe (12) auquel un moule fixe (32) est fixé, et
dans laquelle la partie de corps de plateau (121) a le moule fixe (32) fixé à cette dernière.

5. Machine de moulage par injection selon l'une quelconque des revendications 1 à 4,
dans laquelle le plateau est un plateau arrière (15) couplé à un plateau fixe (12), auquel un moule fixe (32) est fixé, à une distance de celui-ci via une entretoise (16), et
dans laquelle la partie de corps de plateau (121) a l'entretoise (16) fixée à cette dernière.
